Europäisches Patentamt

European Patent Office

Office européen des brevets

(11) Veröffentlichungsnummer: **0 343 651**
**A1**

## (12) EUROPÄISCHE PATENTANMELDUNG

(21) Anmeldenummer: 89109418.7

(22) Anmeldetag: 24.05.89

(51) Int. Cl.4: **C03C 23/00 , B23K 26/00 , H01S 3/097**

(30) Priorität: 27.05.88 BG 84291/88

(43) Veröffentlichungstag der Anmeldung:
29.11.89 Patentblatt 89/48

(84) Benannte Vertragsstaaten:
**DE ES FR GB GR IT SE**

(71) Anmelder: PU "PAISSII HILENDARSKI"
**Tzar-Assen-Strasse 24**
**4000 Plovdiv(BG)**

(72) Erfinder: **Dimitrov, Dimiter Angelov**
**48, Boul Maichika App. 22**
**BG-4002 Plovdiv(BG)**
Erfinder: **Dakov, Mincho Stanev**
**Komplex Trakia Bl. 210-A App. 20**
**BG-4002 Plovdiv(BG)**
Erfinder: **Tonchev, Dancho Tonchev**
**Studentsko Gradche "Hr. Botev" Bl. 16, st.**
**BG-1310 Sofia(BG)**
Erfinder: **Kalafirov, Hristo Andonov**

**BG-4108 Markovo-Village Distrikt Plovdiv(BG)**
Erfinder: **Botev, Todor Stefanov**
**18a, Bresovska Strasse**
**BG-4000 Plovdiv(BG)**
Erfinder: **Shterev, Krassimir Emilov**
**Komplex Trakia Block 33A App. 67**
**Plovdiv(BG)**
Erfinder: **Kojuharov, Vladimir Stoyanov**
**35-43A, P. Enev Strasse**
**BG-1126 Sofia(BG)**
Erfinder: **Dimitrov, Yordan Ivanov**
**Komplex Mladost-2 Block 226 A**
**BG-1199 Sofia(BG)**
Erfinder: **Tzvetkov, Dimiter Velikov**
**Jelesni Vrata Strasse 26A App. 41**
**Varna(BG)**

(74) Vertreter: **Ebbinghaus, Dieter et al**
**Patentanwälte v. Füner, Ebbinghaus, Finck**
**Mariahilfplatz 2 & 3**
**D-8000 München 90(DE)**

(54) Verfahren und Vorrichtung zur dekorativen Bearbeitung von Glas und Keramik.

(57) Das erfindungsgemäße Verfahren zur dekorativen Bearbeitung von Glas, Keramik und deren Erzeugnissen wird mittels periodischer Impuls-Querentladung bei atmosphärischem Druck (RP TEA) eines $CO_2$-Lasers mit einer Impulsenergie von 1 bis 5 J, einer Leistungsdichte von $1 \times 10^6$ bis $6 \times 10^7$ $W/cm^2$, einer Impulsdauer von 50 bis 100 ns, einer Impulsfolgefrequenz von 1 bis 500 Hz und einer durchschnittlichen Leistung von 1 bis 1000 W mit einer Metallmaske mit einem lithographisch reproduzierten Abbild mittels einer tragenden Rasterstruktur durchgeführt. Die Bewegung des zu dekorierenden Erzeugnisses und die Ausstrahlungsfrequenz des Lasers werden so kombiniert, daß in Abhängigkeit vom benötigten Kontrast des Abbildes 5 bis 80 % der Flecke zusammenfallen.

Die Vorrichtung zur Laserdekoration besteht aus einer Basis (1) mit einer darauf montierten Konsole (2), auf der parallele Elemente (3) und eine Schraube (4) befestigt sind. Eine auf der Schraube (4) bewegliche Schraubenmutter (8) ist mittels einer zweiten Konsole (9) an einer Gabel (10) befestigt, auf der mittels eines Handgriffes (13) und einer Fixiereinrich tung (14) ein Schlitten (15) mit Längskanälen (16) befestigt ist. Die ganze Vorrichtung ist in einem schallisolierenden Kasten montiert. In einem Sitz (33) befindet sich ein sphärischer Spiegel (34) der die Laserstrahlung auf die Maske (21) reflektiert und fokussiert.

Fig.1

## Verfahren und Vorrichtung zur dekorativen Bearbeitung von Glas und Keramik

Die Erfindung bezieht sich auf ein Verfahren und eine Vorrichtung zur dekorativen Bearbeitung von Glas und Keramik sowie Erzeugnissen aus Glas und Keramik mittels eines $CO_2$-Lasers.

Aus der GB-PS 1294359 (1) und den Zeitschriften Sklar a keramik, Rochik - 33/1983, 171-175 (2), Sklar a keramik, Rochik - 34/1984, 157-169 (3), Silikattechnik 35/1984 H. 2, 54-56 (4), Silikattechnik 35/1984 H. 5, 146-148 (5) sind bereits zwei Verfahren zur dekorativen Bearbeitung von Glas und Keramik und deren Erzeugnissen mittels eines $CO_2$-Lasers, $\lambda$ = 10,6 $\mu$m, bekannt. Nach dem ersten Verfahren gelangt der Laserstrahl durch die Öffnungen in einer Metallmaske, in der das gewünschte Motiv ausgeschnitten ist, auf die Erzeugnisse. Nachteilig sind hierbei die schwer zu lösenden Probleme der Dauerhaftigkeit der Metallmasken (Druckschriften 3, 5). Das zweite Verfahren besteht darin, daß der Laserstrahl in gewissen Zeitabschnitten auf das Glas gelangt, deren Dauer von einem äußeren Unterbrecher gesteuert wird, z. B. eine Blende, die ihrerseits durch ein elektrisches Signal oder ein optisch-elektrisches Lesegerät gesteuert wird. Das Steuersignal kann über eine Optik oder auch durch Veränderung der Strahlungsstärke auf den Gegenstand einwirken. Nachteilig an diesem Verfahren ist die verringerte Produktivität bei der Erzeugung komplizierter Gravierungen, die bedingt ist durch die Notwendigkeit, das Abbild Punkt für Punkt zu verfolgen, die Kompliziertheit der erforderlichen Ausrüstungen und des notwendigen Programms (Druckschriften 1, 2, 3).£

Aus P. Urbanek, Laserdecoration of Glass J. Noncrystal. Sol. 38-39 (1980) S. 891 (6), ist eine Vorrichtung zum Gravieren mittels Laser bekannt, die aus einer Basis mit einer darauf montierten Konsole, auf der parallele Elemente und eine Schraube befestigt sind, besteht. Die Schraube ist mit ihrem oberen Ende in einer Pfanne gelagert, ihr unteres Ende ist durch ein Gelenk mit einem Elektromotor verbunden. Ein zweiter Elektromotor versetzt die Schraube über ein Zahnrad in eine Drehbewegung. Nachteilig an dieser Vorrichtung zur Dekoration mittels Laser ist, daß sie nicht periodisch rücklaufen (Sektorbetrieb) kann und daß es unmöglich ist, die Innenseite von Erzeugnissen mit flacher und quasi-flacher Geometrie zu dekorieren. Dies liegt daran, daß die Drehachse des zu dekorierenden Erzeugnisses stets senkrecht steht und übereinstimmt mit der hin- und hergehenden senkrechten Bewegung. Es ist ferner unmöglich, ein einfaches rückstrahlendes und fokussierendes optisches System zu gebrauchen.

Der Erfindung liegt die Aufgabe zugrunde, ein Verfahren und eine Vorrichtung zur dekorativen Bearbeitung von Glas und Keramik sowie Glas- und Keramikerzeugnissen zu schaffen, mit deren Hilfe mehrfach komplizierte Abbilder reproduziert werden können. Die Vorrichtung soll im Sektorbetrieb arbeiten können und die Dekoration der Innenseite von Erzeugnissen mit quasi-flacher und flacher Geometrie erlauben. Dabei soll es möglich sein, ein einfaches reflektierendes und fokussierendes optisches System zum Dekorieren zu verwenden.

Diese Aufgabe wird erfindungsgemäß dadurch gelöst, daß die Bearbeitung mittels periodischer Impuls-Querentladung erfolgt. Im einzelnen erfolgt die Querentladung bei atmosphärischem Druck (TEA) mittels eines $CO_2$-Lasers mit einer Impulsenergie von 1 - 5 J, einer Leistungsdichte bei der Bearbeitung von $1 \times 10^6$ bis $6 \times 10^7$ W/cm², einer Impulsdauer von 50 bis 100 ns, einer Impulsfolgefrequenz von 1 bis 500 Hz und einer durchschnittlichen Leistung von 1 bis 1000 W. Die Metallmaske weist ein photolithographisch reproduziertes Abbild in einer tragenden Rasterstruktur auf. Die Maske besteht aus Kupfer oder Messing mit einer Dicke von 0,1 bis 0,9 mm. Sie wird auf einer Fläche von 10,6 $\mu$m spiegelglatt poliert. Der Laserstrahl mit den oben genannten Kennwerten und Fläche wird für einen Schuß von 0,5 cm² bis 2 cm² auf dem sich bewegenden Gegenstand geleitet. Als Ergebnis einer Einwirkung verbleibt auf dem Erzeugnis das durch die Verdampfung der Oberflächenschicht des Materials erzeugte Abbild und man erhält sich leicht unterscheidende Spuren (die zu bearbeitende Oberfläche ist mattiert). Der Laserstrahl wirkt auf dem Erzeugnis durch die Metallmaske mit dem photolithographisch reproduzierten Abbild (z. B. Portrait, Landschaft, feine Dekoration) mittels einer tragenden Viereck- oder Punkt-Rasterstruktur mit einem Auflösungsvermögen von 5 bis 150 Linien/ cm. Die Kontakt-Rasterstruktur wird auf einem Photoresist vor der Photoschablone mit dem Abbild exponiert. Nach dem Entwickeln wird bis zur Perforation der Folie zur Herstellung der Maske geätzt. In Einzelfällen kann auf einer Metallmaske ohne Rasterung die Rasterstruktur durch Befestigung eines Metallnetzes hergestellt werden. Die Bewegung des Erzeugnisses und die Austrahlungsfrequenz des Lasers werden so kombiniert, daß in Abhängigkeit vom benötigten Kontrast 5 bis 80 % der Flecke zusammenfallen.

Die Aufgabe wird ferner durch eine Vorrichtung zur dekorativen Bearbeitung von Glas und Keramik sowie Glas- und Keramikerzeugnissen gelöst, die eine Basis und eine darauf montierte Konsole aufweist, auf der parallele Elemente und eine Schraube befestigt sind. Die Schraube ist an ihrem oberen Ende in einer Pfanne gelagert und am unteren Ende mittels eines Gelenks mit einem Elektromotor gekuppelt. Die sich in der Schraube bewegende Mutter ist mittels einer zweiten Konsole an einer Gabel befestigt, die zusammen mit in einem flachen Separator liegenden Stahlkugeln in den parallelen Elementen gelagert ist. Auf der Gabel sind mittels Handgriffen und einer Fixiereinrichtung ein Schlitten mit Längskanälen und eine Leiste zur Winkelneigung um 15° befestigt. Auf dem Schlitten ist ein zweiter Elektromotor angebracht, auf dessen Achse ein die Maske aufnehmendes Fundament montiert ist. Das zu dekorierende Erzeugnis wird in fester Beziehung zur Maske eingesetzt. Auf dem drehbaren Fundament ist ein Kontaktplättchen montiert, das zu bestimmten Momenten in Berührung mit die Bewegung begrenzenden Kontakten gelangt, die längs eines am Schlitten befestigten Ringes verstellbar sind. Auf der Rückseite der ersten Konsole ist eine Leiste montiert, auf der zwei Begrenzungskontakte befestigt sind, die zu bestimmten Momenten mit dem an der Schraubenmutter befestigten Kontaktplättchen in Berührung kommen. Auf der Rückseite der Basis ist eine Schraube montiert. Die ganze Vorrichtung ist in einen schallisolierenden Kasten eingesetzt, an dessen vorderem Ende eine L-förmige Manschette montiert ist, an der mittels Justierbolzen und eines O-Ringes ein Sitz angebracht ist. In diesem Sitz befindet sich ein sphärischer Spiegel, der die Laserstrahlung reflektiert und auf das Erzeugnis fokussiert. Falls die Vorrichtung zum Dekorieren der Innenseite von quasi-flachen oder flachen Erzeugnissen dienen soll, wird auf dem rotierenden Fundament eine Scheibe befestigt, auf der vier Speichen mit vier radialen Gleitern und vier Federn montiert sind. Auf der Scheibe ist ein auswechselbares Gestell angeordnet, auf dem das Erzeugnis und letztlich die Maske aufliegen.

Das erfindungsgemäße Verfahren hat alle Vorteile des aus der Druckschrift (4) bekannten Verfahrens zur dekorativen Bearbeitung von Glas, Keramik und deren Erzeugnissen. Außerdem werden bei hoher Produktivität verfügbarer und zuverlässiger Anlagen mehrfach komplizierte Abbildungen reproduziert und somit das Problem der Dauerhaftigkeit der Masken gelöst. Das erfindungsgemäße Verfahren erlaubt den zusätzlichen Einsatz der Vorrichtung zur dekorativen Bearbeitung in einer automatisierten mehrfachen Produktionslinie mit geringfügigen Einrichtungen.

Die Vorteile der erfindungsgemäßen Vorrichtung zum Gravieren mittels Laser sind: Möglichkeit der Arbeit im Sektorbetrieb sowie Dekorieren der Innenseite von Erzeugnissen mit quasi-flacher und flacher Geometrie.

Im folgenden werden Ausführungsbeispiele der erfindungsgemäßen Vorrichtung zur dekorativen Bearbeitung von Glas- und Keramikerzeugnissen erläutert. Es zeigen:

Fig. 1 einen Querschnitt einer Vorrichtung zur dekorativen Laserbearbeitung,

Fig. 2 eine Ansicht der Vorrichtung von oben und

Fig. 3 einen Längsschnitt einer Vorrichtung zur dekorativen Bearbeitung von Erzeugnissen mit quasiflacher und flacher Geometrie.

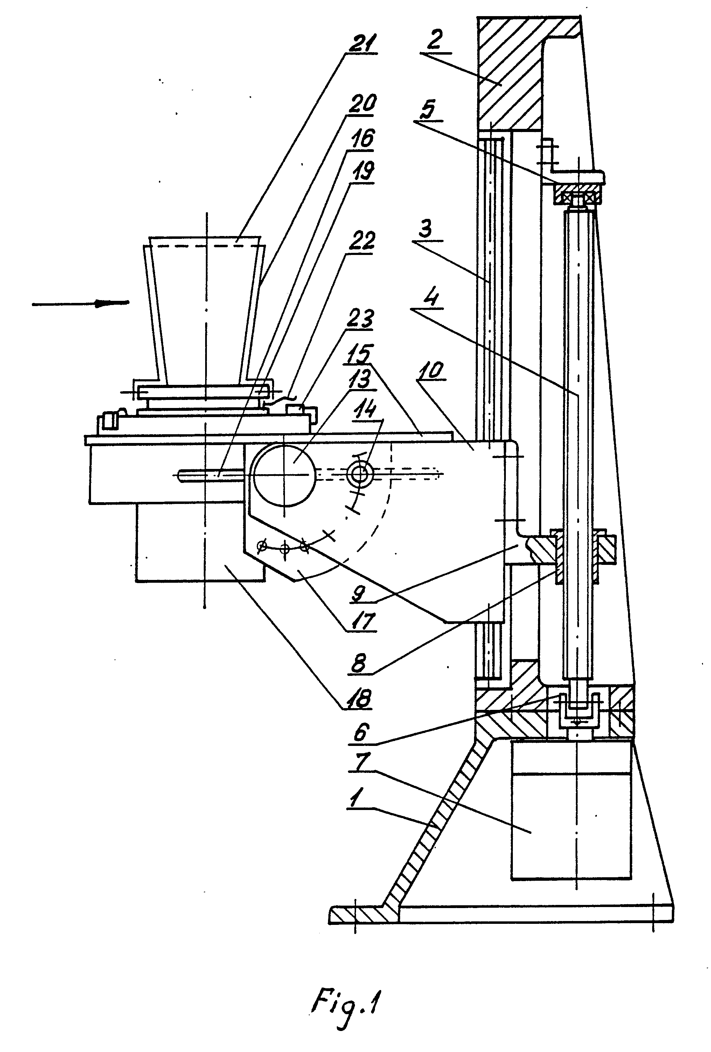

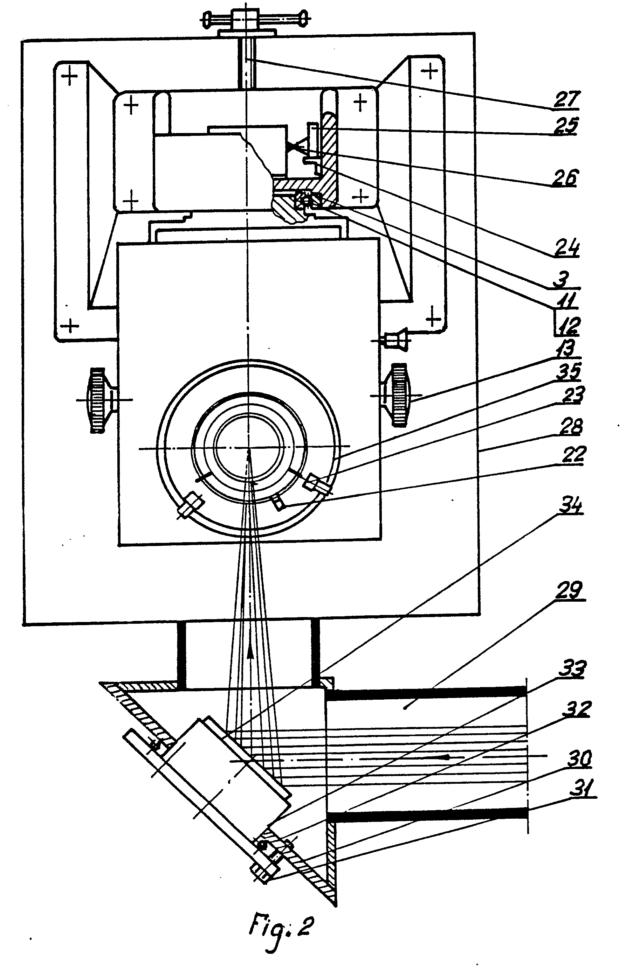

Die in Fig. 1 gezeigte Vorrichtung zum Dekorieren von Glas und Keramik mittels eines Laserstrahls besteht aus einer Basis 1 mit einer darauf montierten Konsole 2, auf der parallele Elemente 3 und eine Schraube 4 befestigt sind. Die Schraube 4 ist mit ihrem oberen Ende in einer Pfanne 5 gelagert; ihr unteres Ende ist über ein Gelenk 6 mit einem Elektromotor 7 verbunden. Eine auf der Schraube oder Spindel 4 bewegliche Schraubenmutter 8 ist mittels einer zweiten Konsole 9 an einer Gabel 10 befestigt, die mittels in einen flachen Separator 12 eingesetzter Stahlkugeln (Fig. 2) in den parallelen Elementen 3 gelagert ist. Auf der Gabel 10 ist mittels eines Handgriffes 13 und einer Fixiereinrichtung 14 ein Schlitten 15 mit Längskanälen 16 und einer Leiste 17 zur Winkelneigung um 15° angebracht. Auf dem Schlitten 15 ist ein zweiter Elektromotor be festigt, auf dessen Achse ein umlaufendes Fundament oder Träger 19 montiert ist. Auf dem Fundament 19 ist eine Maske 20 befestigt, in die, gegenüber dieser unbeweglich, das zu dekorierende Erzeugnis 31 eingesetzt ist. Auf dem rotierenden Fundament oder Teller 19 ist ein Kontaktplättchen 22 mit verstellbaren Kontaktoren 23 montiert.

Gemäß Fig. 2 ist auf der Rückseite der ersten Konsole 2 eine Leiste 24 montiert, auf der zwei Begrenzungskontaktoren oder Endkontakte 25 befestigt sind, die zu bestimmten Momenten mit einem an der Schraubenmutter 8 befestigten Kontaktplättchen 26 in Berührung kommen. Auf der Rückseite der Basis 1 ist eine Schraube 27 montiert.

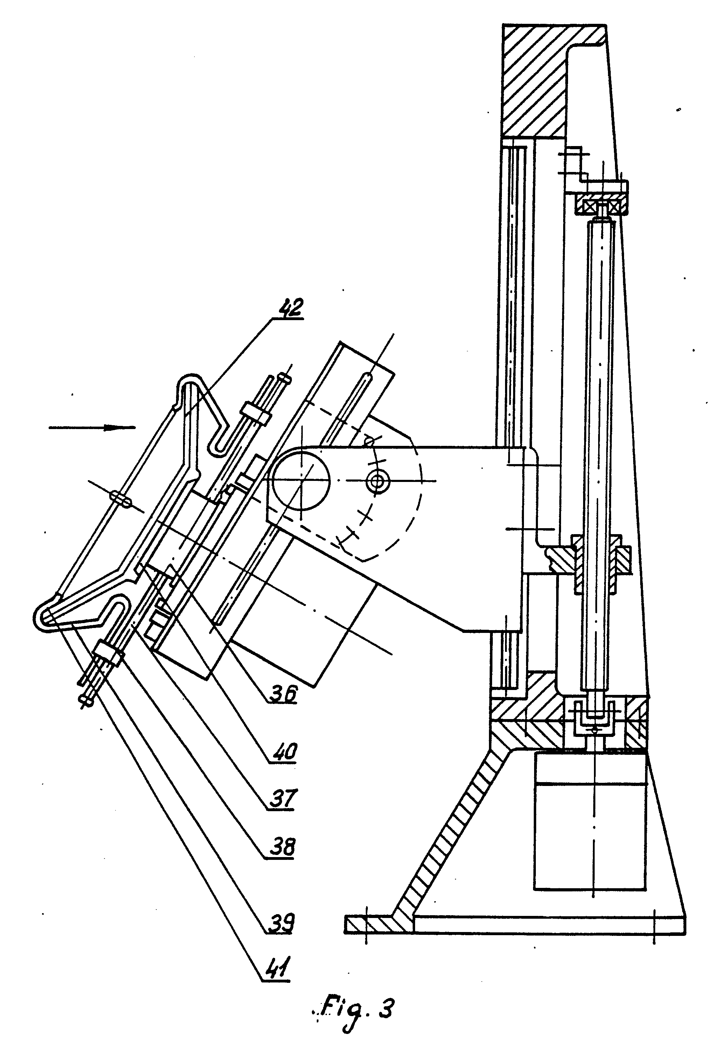

Die ganze Vorrichtung ist in einen schallisolierenden Kasten 28 eingesetzt, auf dessen Vorderseite eine L-förmige Manschette 29 und eine Platte 30 montiert sind, an der mittels eines justierenden Bolzens 31 und eines O-Ringes 32 ein Sitz 33 angebracht ist, der einen sphärischen Spiegel 34 zum Reflektieren und Fokussieren der Laserstrahlung auf die Maske 20 trägt. Ein Ring 35 ermöglicht den Sektorbetrieb. Falls die Einrichtung zur Dekoration der Innenseite von quasi-flachen und flachen Erzeugnissen gebraucht wird, befestigt man gemäß Fig. 3 auf dem Fundament 19 eine Scheibe 36, auf der vier Speichen 37 mit vier radialen Gleitern 38 und vier Federn 39 montiert sind. Auf der Scheibe 36 sind ein auswechselbares Gestell 40, das Erzeugnis 41 und die Maske 42 angeordnet.

Die Vorrichtung zur dekorativen Bearbeitung von Glas und Keramik arbeitet wie folgt:

Beim Dekorieren muß Erzeugnis 21 in und gegenüber der Maske 20 unbeweglich angeordnet sein. Die Laserstrahlung soll senkrecht auf die Oberfläche des Erzeugnisses 21 und der Maske 20 auftreffen, die zwei gleichzeitige Bewegungen, nämlich eine vertikal fortschreitende (oder hin- und hergehende) und eine in einer Richtung verlaufende oder reversible rotierende Bewegung ausführen.

Die Sektorbewegung wird durch die Endkontakte 23 vorgegeben, die an verschiedenen Stellen des Ringes 35 befestigt sind und zu bestimmten Momenten mit dem Kontaktplättchen 22 in Berührung kommen. Hierdurch wird der Sektorwinkel bestimmt. Das Kontaktplättchen 22 ist auf dem umlaufenden Fundament 19 angebracht.

Beim Dekorieren von Erzeugnissen mit quasiflacher und flacher Geometrie wird auf dem Fundament 19 die Scheibe 26 mit den Speichen 41 befestigt. Hierauf wird das dem Erzeugnis 41 entsprechende auswechselbare Gestell 40 angebracht. Auf dem Gestell 40 werden das Erzeugnis 41 und die Maske 42 mittels der Federn 39 fixiert, die sich längs der Speichen 37 bewegen. Damit die Laserstrahlung senkrecht auf die Oberfläche des Erzeugnisses mit quasi-flacher oder flacher Geometrie fällt, wird der Schlitten 15 um den Bolzen des Handgriffes 13 gedreht und mittels des Fixators 14 in der gewünschten Stellung blockiert, um danach die Handgriffe 13 festzudrehen. Die Fixieröffnungen der Platte 17 zur Winkelneigung erstrecken sich über 15° und erlauben eine Genauigkeit der Orthogonalität gegenüber der Laserstrahlung von ± 7°30'.

Die vertikal-fortschreitende oder hin- und hergehende Bewegung wird durch den Motor 7 hervorgerufen; die rotierende Bewegung wird mit Hilfe des Gelenks 6 auf die Schraube 4 übertragen. Mit Hilfe der Schraubenmutter 8 wird die Rotationsbewegung in eine geradlinig-fortschreitende Bewegung verwandelt, die durch die Konsole 9 auf die Gabel 10 und den Schlitten 15 übertragen wird, der sich längs der parallelen Elemente auf- und abbewegt. Die Höhe der Aufwärts- oder Abwärtsbewegung des Schlittens 15 wird durch die beiden Endkontakte 25 bestimmt, die an der Leiste 24 befestigt sind, sowie das Kontaktplättchen 26, das bei Kontakt mit einem der Endkontakte 25 ein elektrisches Signal zum Umschalten und Reversieren des elektrischen Motors 7 erzeugt.

Die Drehbewegung in einer oder zwei Richtungen wird durch den zweiten Elektromotor 10 hervorgerufen, dessen Drehbewegung auf das Fundament 19 mit der Maske 20 übertragen wird, gegenüber der das Erzeugnis 21 unbeweglich fixiert ist.

Die Vorrichtung zur Dekoration mittels Laser ist in einem geräuschabsorbierenden Kasten 28 montiert, an dessen einem Ende eine L-förmige Manschette 29 befestigt ist, durch die die Laserstrahlung hindurchtritt. Die aus dem Laser austretende kollimierte Laserstrahlung gelangt auf den konkaven sphärischen Spiegel 34, der im Sitz 33 unter einem Winkel von 45° zum einfallenden Strahl befestigt ist und ihn unter einem Winkel von 90° auf das zu dekorierende Erzeugnis 21 oder 41 reflektiert. Mittels der drei Justierbolzen 31, die zueinander unter einem Winkel von 120° angeordnet sind, und des aus Gummi bestehenden O-Ringes 32 zwischen dem Sitz 33 und der Platte 30 kann der Spiegel 34 innerhalb bestimmter Grenzen justiert werden. Um den günstigsten Abstand zum Gravieren des Erzeugnisses gegenüber dem Brennpunkt des Spiegels 34 zu erreichen, wird der Schlitten 15 längs des Kanals 16 angenähert oder entfernt, oder es wird mittels der Schraube 27 die ganze Vorrichtung vorgerückt.

Bei der dekorativen Bearbeitung von Gläsern durch periodische Impuls-Querentladung bei Atmoshärendruck (RP TEA) mittels $CO_2$-Laser werden nach Abstimmung zur Arbeit folgende Parameter angewendet: Impulsenergie 5 J, Leistungsdichte in der Zone der Einwirkung $1 \times 10^7$ $W/cm^2$, Impulsdauer 70 ns, Impulsfolgefrequenz 15 Hz und durchschnittliche Leistung 50 W.

Bei der dekorativen Bearbeitung von Porzellangefäßen in periodischer Impuls-Querentladung bei Atmosphärendruck (RP TEA) wird der $CO_2$-Laser auf folgende Arbeitsparameter abgestimmt: Impulsenergie 5 J, Leistungsdichte $3 \times 10^7$ $W/cm^2$, Impulsdauer 50 ns, Impulsfolgefrequenz 20 Hz, durchschnittliche Leistung 100 W.

## Ansprüche

1. Verfahren zur dekorativen Bearbeitung von Glas, keramik und Glas- und Keramikerzeugnissen mittels eines $CO_2$-Impulslasers ($\lambda$ = 10,6 $\mu$m) und einer Impulsfolgefrequenz von 1 bis 100 Hz unter Einwirkung des Laserstrahls durch eine Metallmaske aus einer polierten Metallfolie mit einer Dicke von 0.1 bis 0,9 mm mit einem photolithographisch reproduzierten feinen Rasterabbild mit einer Auflösung von 5 bis 150 Linien/$cm^2$, dadurch gekennzeichnet, daß die Bearbeitung mit periodischer Impuls-Querentladung bei Atmosphärendruck (RP TEA), einer Impulsenergie von 1 bis 5 J, einer Leistungsdichte bei der Bearbeitung von $1 \times 10^6$ bis $6 \times 10^7$ $W/cm^2$, einer Impulsdauer von 50 ns bis 100 ns und einer durchschnittlichen Leistung von 1 bis 1000 W erfolgt, wobei die mattierte Fläche für einen Schuß 0,5 bis 2 $cm^2$ beträgt.

2. Vorrichtung zur Laserdekoration mit einer Basis (1), einer auf der Basis (1) montierten Konsole (2), auf der parallele Elemente (3) und eine Schraube (4) montiert sind, die mit ihrem oberen Ende in einer Pfanne (5) gelagert und deren unteres Ende über ein Gelenk (6) mit einem Elektromotor (7) gekuppelt ist, dadurch gekennzeichnet, daß eine auf der Schraube (4) bewegliche Mutter (8) über eine zweite Konsole (9) an einer Gabel (10) befestigt ist, die mittels in einen flachen Separator (12) eingesetzter Stahlkugeln (11) in den parallelen Elementen (3) gelagert ist, daß an der Gabel (10) mittels eines Handgriffes (13) und einer Fixiereinrichtung (14) ein Schlitten (15) mit Längskanälen (16) und eine Leiste (24) zur Winkelneigung um bis zu 15° angebracht sind, daß am Schlitten (15) ein zweiter elektrischer Schlitten (18) zur Rotations-Rückbewegung angebracht ist, auf dessen Achse ein sich drehendes Fundament (19) zur Befestigung der Maske (20) montiert ist, in die das Erzeugnis (21) unbeweglich eingesetzt wird, un daß an dem umlaufenden Fundament (19) ein Kontaktplättchen (22) montiert ist, das zu bestimmten Momenten längs eines Ringes (35) verstellbare Begrenzungskontakte (23) berührt.

3. Vorrichtung nach Anspruch 2, dadurch gekennzeichnet, daß sie in einen schallisolierenden Kasten (28) eingesetzt ist, an dessen vorderem Ende eine L-förmige Manschette (29) mit einer Platte (30) befestigt ist, und daß an der Platte (30) mittels Justierbolzen (31) und eines O-Ringes (32) ein Sitz (33) angebracht ist, in dem sich ein sphärisch konkaver Spiegel (34) zum Reflektieren und Fokussieren der Laserstrahlung auf die Maske (20, 42) befindet.

4. Vorrichtung nach Anspruch 3, dadurch gekennzeichnet, daß auf dem drehbaren Fundament (19) eine Scheibe (36) befestigt ist, auf der vier Speichen (37) mit vier Federn (39) montiert sind, wobei auf der Scheibe (36) ein auswechselbares Gestell (40) angeordnet ist.

EPAB-37644.3

Fig.1

EPAB-37644.3

Fig. 2

EPAB-37644.3

42

36

40

37

38

39

41

Fig. 3

| | EINSCHLÄGIGE DOKUMENTE | | EP 89109418.7 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.4)** |
| D,A | JOURNAL OF NON-CRYSTALLINE SOLIDS, Bände 38,39, Teil II, Mai/Juni 1980, North-Holland-Amsterdam<br>* Seiten 891-895 *<br>& DE-A1-3 121 138<br>-- | 1,2 | C 03 C 23/00<br>B 23 K 26/00<br>H 01 S 3/097 |
| D,A | GB - A - 1 294 359 (WESTINGHOUSE ELECTRIC CORPORATION)<br>* Seite 2, Zeile 93 - Seite 3, Zeile 64; Seite 4, Zeilen 84-91; Fig. 1 *<br>-- | 1,2 | |
| A | FR - A1 - 2 267 288 (CLIGNET)<br>* Seite 4, Zeile 2 - Seite 5, Zeile 26 *<br>-- | 1 | |
| A | GB - A - 2 160 196 (THE GENERAL ELECTRIC COMPANY)<br>* Seite 1, Zeilen 54-93; Fig. *<br>-- | 1 | **RECHERCHIERTE SACHGEBIETE (Int. Cl.4)**<br><br>C 03 C |
| D,A | SILIKATTECHNIK, Heft 5, 1984 VEB VERLAG FÜR BAUWESEN, Berlin<br>* Seiten 146-148 *<br>---- | 1 | B 23 K<br>H 01 S |

Der vorliegende Recherchenbericht wurde für alle Patentansprüche erstellt.

| Recherchenort | Abschlußdatum der Recherche | Prüfer |
|---|---|---|
| WIEN | 28-08-1989 | HAUSWIRTH |